# EUROPEAN PATENT APPLICATION

(11) **EP 1 612 726 A1**
(43) Date of publication of application: **04.01.2006**
(21) Application number: 04015089.8
(22) Date of filing: 28.06.2004
(51) Int. Cl.: G06T 1/00

(54) **Process for the verification of the visible part of a digital document**

(71) Applicant: Gubo, Adalbert, 55118 Mainz (DE)
(72) Inventor: Gubo, Adalbert, 55118 Mainz (DE)
(74) Representative: Deckers, Hellmuth Alexander

(57) **Abstract**

A process for the verification of the visible part **A** of a digital document comprising a visible part **A** and a concealed part **B**, and the printed document **C** together with its pixel equivalent **D** corresponding thereto, comprising the steps of extracting a code **E** representing a text from **D** after generating the printout **C**, and concurrently, its digital equivalent, **D**, creating a code **F** from the visible portion of the original document, **A**, taking into account the concealed information, **B**, and comparing codes **E** and **F** for identity, and digitally signing the result of the comparison **G** to yield a digitally signed result, **H**

## Description

The present invention relates to a process for the verification of the visible part of a digital document.

As is well known, only that part of a document that is visible to an undersigned (hereinafter referred to as part "**A**" of the said document) can be signed by him in a legally binding manner.

In addition to the visible part **A**, digital documents also include a part "**B**" which is invisible or concealed. Such invisible information is, e. g. formatting information such as the type of font used, carriage return and page break codes, indentation codes and tab settings, and information generated by the word processing software such as time and date of creation, of last access, and of modification, and the names of the persons who created or modified the instant document which information is collected, inter alia, from data in the registry of the computer used.

This part **B**, in turn, may exert an influence on the visible part, **A**, of the electronically generated or stored digital document. The assessment of the digital signature of a document, such as a file generated by a word processing software, as legally binding is therefore not in accordance with the provisions of digital signature acts.

It is generally accepted that the printout **C** on paper of a digital document such as a file generated by a word processor can be generated concurrently and identically in a digital, or pixel, form **D**, according to European Patent EP 0 838 061 B1, and European Patent Application 04 009 792.5.

It is also known that **C**, as the visible printed part of the said document, may be provided with a digital signature. It is further known from the latter patent application that the digital form **D** is a true image of **C**.

Up to now, proof of the identity of **A** and **C** or **D** could only be made by visual inspection, or by adding additional information which was needed to allow definite identification. This latter method relied on the belief that the identity of such additional information, e. g. in the form of a bar code added to document **A** with the printed information on **C** was proof enough to assume that also the rest of the information on both documents **A** and **C** (or **D**) was the same.

The process of the present invention neither needs additional information added to the original document, nor does it manipulate its visible part **A** nor its concealed part **B**. It does also not need a visual comparison to establish the identity of **A** with **C** or **D**.

What is needed to establish the identity between the visible part **A** of an original digital document such as a word processor file, with its printed version **C** or the pixel form digital equivalent thereof, **D**, is merely a process to compare **A** and **D**.

This purpose is achieved by the process of the present invention using a method of encoding of text into a digitally processable format, such as an ASCII code. Other encoding formats can also be used, of course, as long as they can represent a text. In this context, also documents comprising numerical data are considered as being text documents. Therefore, the term "text" as used herein also includes numbers, and mixtures of text and numbers.

The process of the present invention comprises basically three steps:
- in the first step, after generating the printout **C**, and concurrently, its digital equivalent, **D**, a code **E** representing a text is extracted from **D**. As this code **E** does not contain any formatting information, it is also a representation of **C**. Needless to add, the code **E** is not a representation of the formatting of **C** or **D**,
- in the second step, a code **F** is created from the visible portion of the original document, **A**, taking into account the concealed information, **B**. This code **F** which also represents a text is generated according to the same rules as those of the first step, such as ASCII if ASCII encoding was also used in the first step to generate code **E**,
- in the third step, finally, it suffices to compare codes **E** and **F** to be able to make a definite statement regarding the identity of **A** on the one side, and **C** or **D** on the other side.

Extraction of the codes **E** and **F** is preferably performed by a hardware engine to increase the speed and reliability of the code generation.

The method of comparison can be simplified by creating a hash code each from **E** and **F**, hereinafter referred to as **Eh** and **Fh**, respectively. The hash algorithm used is the same in both cases. Both hash codes **Eh** and **Fh** are then compared to each other.

If the result **G** from such comparison reveals that **Eh** and **Fh** are identical, then **E** and **F** must also be the same, and hence, **A** is identical with **C**, or its digital equivalent, **D**.

The invention also relates to a digitally signed comparison result **H** which is generated from the result **G** of the comparison by digitally signing this result **G** in accordance with the digital signatures act of the relevant country or group of countries.

By such digitally signed result **H**, it can be unequivocally established in a legally recognised way that a printout **C**, or its digital equivalent, **D**, is identical to the original document, **A**, such as a word processor file. The digital signature which is incorporated into **G** to generate **H** can be adapted to the individual legislation of the relevant country.

In a further embodiment, the present invention relates to a process which additionally comprises a step that makes sure that any change made to the concealed part **B** of the original document also affects its visible portion, **A**, in a unique way. This step can easily be incorporated into the word processor used as an add-in, such as a function which prints a checksum of the bytes of the relevant document in the bottom part of the printout of the document.

This embodiment makes sure that also the complete original document consisting of **A** and **B** is incorporated into the verification system.

These process steps have established the identity, as signed by a person or a system, **Z**, of the original document at least in its visible portion **A**, the paper printout **C** thereof, and the digital equivalent **D** of the latter.

A digital signature of **C** therefore also relates to **A** and **D**, in the same way as any declaration of intent made in a digital way by digitally signing **A** will invariably leave the identity between **A** and **C** or **D** unaffected. In the same way, the digital signature of **D** is equivalent to a digital signature of **A** or **C**.

The process fully described in this application makes it possible to authenticate digital documents by a digital signature in a way which includes both the visible part **A** and the concealed part **B** of the source document, and the printed document **C** and its digital equivalent **D**, and offers a digitally signed confirmation **H** of the identity of these.

Any digital document **X** generated by, e. g. a word processor, comprising a visible part **A** and a concealed part **B** and digitally signed according to the process of the present invention can thus be authenticated, regardless of where the digital signature is applied.

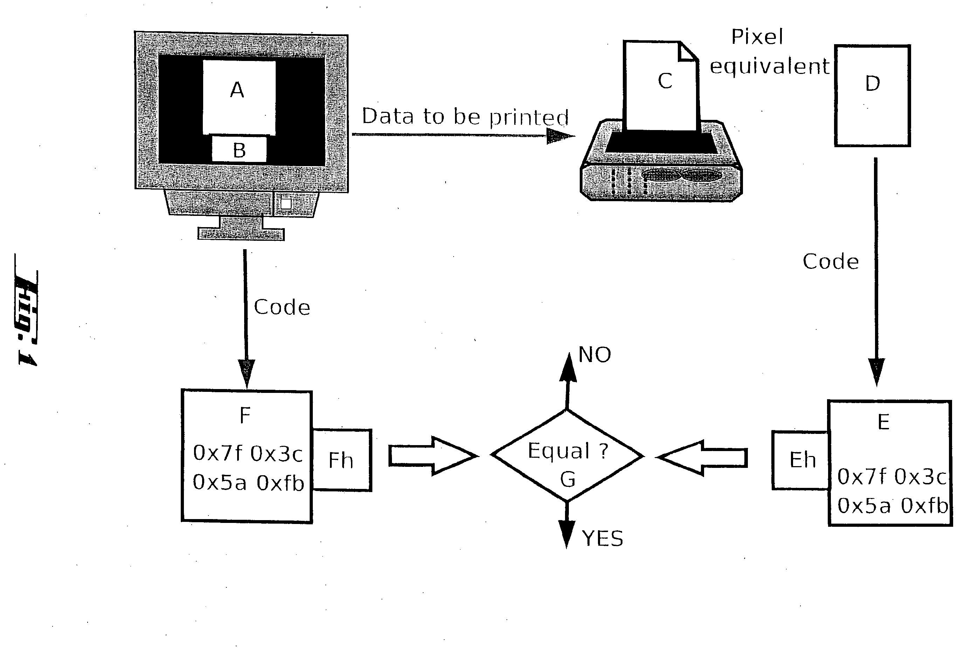

The invention is further illustrated in the figure, which shows the individual process steps.

The visible part **A** of a digital document on a computer screen, accompanied by its invisible or concealed part **B** comprising formatting and author information is sent to a printer where a paper printout **C** is generated. At the same time, a pixel equivalent **D** of the printed document **C** is generated on a real time scale using fast circuitry. Both **A** and **B** in the computer and **D** from the printer circuitry are converted to codes **E** and **F**, respectively, comprising the text information of the documents. As the text information is independent of formatting, **E** will be identical to **F** if the text portion of both is the same. The comparison is done by another circuitry, which yields a result **G** reflecting whether **E** and **F** are identical or not. This result can the be digitally signed which is not depicted in this figure, to yield a signed comparison result, **H**.

In still a further embodiment, the invention relates to a case where a physical signature may even be applied on the paper printout, **C**, by the use of a digital pad, e. g. a pressure-sensitive digital pad such as described in EP 1 109 126 A2, in combination with **C** which records the movement in the horizontal and vertical direction of a pen performing the signature on the paper printout **C**, as well as the pressure of the pen on the pad, and adds a time stamp to this signature. This additional information is then incorporated into the digitally signed comparison result, **H**. The format of this additional information derived from the physical signature is chosen in a way to meet the requirements of a digital signature according to the signature act of the relevant country.

In a further embodiment of this invention, the comparison result **G** can be combined with the information of the original digital document, preferably in the form of codes **E** or **F**. The digitally signed comparison result, **H**, comprises in this case the merged information from the comparison, as well as the content of the original document. Therefore, **H** includes both the information and the verification or authentication of the original document.

In a preferred variant of this embodiment, also the information of the traditional physical signature is incorporated into **H**.

Even if the paper printout **C** should be destroyed after the traditional physical signing using the writing tool and digital pad, it can be recreated together with the signature by using the additional information which has been incorporated into the digitally signed comparison result **H**.

As it can unequivocally be established that **A** or **C** must have existed to allow **H** to be generated, both **A** and **C** may be destroyed, but their previous existence is always beyond doubt.

## Claims

1. A process for the verification of the visible part **A** of a digital document comprising a visible part **A** and a concealed part **B**, and the printed document **C** together with its pixel equivalent **D** corresponding thereto, comprising the steps of
- extracting a code **E** representing a text from **D** after generating the printout **C**, and concurrently, its digital equivalent, **D**,
- creating a code **F** from the visible portion of the original document, **A**, taking into account the concealed information, **B**,
- comparing codes **E** and **F** for identity, and digitally signing the result of the comparison **G** to yield a digitally signed result, **H**.

2. The process of claim 1 wherein the result of the comparison **G** also comprises at least one of the codes **E** and **F**.

3. The process of claim 1 wherein in the second step, the concealed information **B** is taken into account to such extent which makes a visible impact on the printed document **C.**

4. The process of claim 3 wherein an additional step is added that makes sure that any change to the concealed part **B** of the digital document also affects its visible part **A** in a unique way.

5. The process of claim 1 wherein a hashcode is computed, using the same algorithm in each case, from codes **E** and **F** to yield hashcodes **Eh** and **Fh**, and wherein the comparison of E and F is effected by comparing their hashcodes **Eh** and **Fh**.

6. The process of claim 1 wherein **C** is physically signed, the signature being recorded with the aid of a digital pad.

7. The process of claim 6 wherein the digital pad records the movements of the writing tool when the signature is applied.

8. The process of claim 7 wherein the information collected by the digital pad when the signature is applied is incorporated into the digitally signed comparison result **H**.

9. The process of claim 8 wherein **C** is physically signed using a pen or other writing tool, and wherein the signature on the paper is concurrently recorded by placement of the signature field of the paper onto the digital pad, and then applying the physical signature.

10. The process of claim 1 where the information of either the code **E** generated from the visible part **A** of the original digital document, optionally in combination with the concealed part **B**, or the code **F** generated from the information of the pixel equivalent **D** of the printed document **C**, is merged with the digitally signed comparison result **H** to yield an item **H**'.

11. A digitally signed result **H** of a comparison of the visible part **A** of a digital document and its printed version **C**, or the pixel form digital equivalent **D** thereof, which is created according to the process of claim 1.

12. The digitally signed result **H** of claim 11 obtained by a comparison of the hash codes **Eh** and **Fh** of **E** and **F**.

13. A combination of the digitally signed result **H** of claim 11 with the signature information having been added to **C** or **H**.
